(19) **Europäisches Patentamt**

**European Patent Office**

**Office européen des brevets**

(11) **EP 1 613 085 A1**

(12) **EUROPEAN PATENT APPLICATION**
published in accordance with Art. 158(3) EPC

(43) Date of publication:
**04.01.2006 Bulletin 2006/01**

(51) Int Cl.:
*H04N 7/16* (1968.09)

(21) Application number: **04725155.8**

(22) Date of filing: **01.04.2004**

(86) International application number:
**PCT/JP2004/004760**

(87) International publication number:
**WO 2004/091215 (21.10.2004 Gazette 2004/43)**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **04.04.2003 JP 2003101250**

(71) Applicant: **MATSUSHITA ELECTRIC INDUSTRIAL CO., LTD.**
**Kadoma-shi, Osaka 571-8501 (JP)**

(72) Inventors:
• **OKAMOTO, Ryuichi**

  **(JP)**

• **KOBAYASHI, Susumu**

  **(JP)**
• **WALTER, Stefan**

  **(JP)**
• **TOKUDA, Katsumi**

  **(JP)**

(74) Representative: **Pautex Schneider, Nicole Véronique et al**
**Novagraaf International SA**
**25, Avenue du Pailly**
**1220 Les Avanchets - Geneva (CH)**

(54) **DIGITAL CONTENT REPRODUCTION DEVICE AND DIGITAL CONTENT USE CONTROL METHOD**

(57) In a content reproduction apparatus according to the present invention, for example, a content usage time indicating a usage permitted time of content is set for the content, and a content reproduction management unit 811 manages a usage state and a rewind limit position of the content. Here, the rewind limit position is a position which indicates that the content cannot be reproduced till the end in the case where a user executes a rewind operation. For example, in the case where the user attempts to execute the rewind operation on the part that is in front of the rewind limit position, the content management unit 811 notifies the user of a warning message in advance.

FIG. 8

## Description

## Technical Field

The present invention relates to a digital content distribution system, in particular, to a digital content distribution system which can protect rights related to digital content data.

## Background Art

In recent years, systems which distribute digital copyrighted works such as music, videos and games through Internet and digital broadcast have been developed, and some of the above mentioned systems are at the stage of being practically used. Also, along with the above mentioned content distribution, from the viewpoint of copyright protection, a method for controlling content usage which limits the number of reproduction, transfer and duplication of the distributed content is being examined.

In the conventional digital content distribution system, as disclosed in Japanese Laid-Open patent application No. 2002-342518, the usage rules for the content of each user are distributed to user's terminal along with the content, and the user's terminal manages the content usage based on the distributed usage rules.

For example, in the case where a user purchases a right to be able to watch a movie called "EIGA" three times, the user terminal receives, from a distribution server, usage rules indicating that "EIGA can be watched three times" along with the content of the movie "EIGA", and manages the content reproduction according to the usage rules. In the case where the user watches the content "EIGA", every time the movie is watched, the audiovisual permitted number of the usage rules managed in the user terminal is deducted by one, and when the audiovisual permitted number reaches zero, the watching is prohibited.

For example, the Japanese Laid-Open patent application No. 2002-342518 discloses a method for using once judgment threshold and the longest usage time in order to manage the audiovisual permitted number. The once judgment threshold is a judgment condition for judging whether or not content is regarded to be watched once. In the case where content is used for longer than the time specified by the once judgment threshold, it is judged that content has been used once. The longest usage time is information indicating the longest time for which the content can be used with the usage of once. Within the time specified by the longest usage time, a user can use content in a flexible form only to consume the audiovisual permitted number of once, while pausing, forwarding and rewinding.

However, according to the conventional technique, there is a problem that in the case where a user frequently pauses, rewinds and the like, before the content is watched till the end, the content watching time reaches the longest usage time, and a disadvantage such as that the content cannot be watched till the end occurs.

## Disclosure of Invention

An object of the present invention, in view of the above mentioned problem, is to provide a content reproduction apparatus and a content reproduction method which prevent a user's disadvantage such as that the user cannot watch content till the end.

In order to achieve the above mentioned object, the content reproduction apparatus according to the present invention reproduces content according to a usage rule of the content included in license information, the apparatus comprising: a detection unit operable to detect a reproduction state of content when the content is reproduced; a prediction unit operable to predict an occurrence of a user's disadvantage based on the usage rule and the reproduction state; and a warn unit operable to warn the user of a prediction in the case where it is predicted that the disadvantage would occur.

Here, said prediction unit may make a prediction according to one of (a) a periodical time out, (b) a user's operation to change a reproduction position, (c) a user's operation to direct pausing and (d) a user's operation to direct stopping.

According to the above mentioned structure, it is possible to predict and warn, in advance, the occurrence of the user's disadvantage such as that the content cannot be reproduced till the end, due to the user's operations such as the position change and the pausing. Thus, there is the effect that it is possible to prevent, in advance, the user's disadvantage such as that the content cannot be reproduced till the end, against the user's intention.

Here, the usage rule may indicate a usage permitted time for which the content usage is permitted. Said detection unit may detect, as a usage state, a reproduction completed section of the content, and said prediction unit may predict whether all of the content can be reproduced by comparing (i) a remaining time which is the usage permitted time deducted by an elapsed time to (ii) a time for a non-reproduced section of the content.

Here, the elapsed time may be one of (a) an actual reproduction time excluding a pausing time and (b) an actual reproduction time including a pausing time.

According to the structure as described above, it is possible to warn, in advance, the user's disadvantage such as that the non-reproduced section cannot be reproduced. For example, the following user's disadvantages can be warned. In the case where the user performs a long pausing operation, the content reproduction apparatus cannot reproduce the content till the end within the usage permitted time. In the case where the user skips the midstream of the content, the content reproduction apparatus cannot watch the skipped non-reproduced section within the usage permitted time. In the case where the user performs the position change operation for reproducing the midstream of the content again, the content reproduction apparatus cannot reproduce the content till the end within the usage permitted time. Such disadvantages as described above can be warned.

Here, the content reproduction apparatus may further comprise a reproduction control unit operable to execute control so as to reproduce the non-reproduced section of the content according to a user's answer operation for the warning by said warn unit.

According to the structure as described above, when the user desires, in response to the warning, the content reproduction apparatus can reproduce the non-reproduced section of the content within the usage permitted time.

Also, the usage rule may indicate a usage permitted time for which the content usage is permitted. Said detection unit may detect a current reproduction position and a rewind limit position of the content. And, said prediction unit may predict that a disadvantage would occur when there is a user's operation to change the current reproduction position to a front of the limit position. Here, the rewind limit position is a head position of a reproduction section including the content end, the reproduction section corresponding to a remaining time that is the usage permitted time deducted by an elapsed time.

According to the above mentioned structure, for example, in the case where the user performs an operation (rewind) to change the reproduction position to a (already watched) far front position, it can be warned that the content reproduction apparatus cannot reproduce the content till the end within the usage permitted time.

Here, the content reproduction apparatus may further comprise a cancel unit operable to cancel the user's operation to change a reproduction position according to a user's answer operation for the warning by said warn unit.

According to the structure as described above, depending on the user's desire, the disadvantageous user's operation can be cancelled.

Here, the content reproduction apparatus may further comprise a reproduction control unit operable to change the reproduction position to the rewind limit position according to a user's answer operation for the warning by said warn unit.

According to the structure as described above, depending on the user's desire, in stead of totally canceling the disadvantageous user's operation, the rewind can be allowed within the range that is not disadvantageous.

Also, the usage rule may include a judgment rule for judging a content reproduction of once. Said detection unit may detect the user's operation to direct a reproduction stop. And, said prediction unit may predict that the user's disadvantage would occur in the case where when the user's operation is detected, the judgment rule is fulfilled.

According to the above mentioned structure, it is warned in advance that the right to reproduce the content once is to be consumed. Thus, it can be prevented that the right is consumed against the user's will.

Here, the content reproduction apparatus further comprises a cancel unit operable to cancel the user's operation to direct the reproduction stop, according to a user's answer to a presentation by a presentation unit.

According to the structure as described above, it can be prevented that the right to reproduce the content once is consumed due to the stop operation such as the user's carelessness.

As described above, according to the present invention, in the case where the user attempts to perform an operation due to which the content may not be used till the end, it is possible to warn the disadvantageous possibility in advance. Thus, it is possible to acquire the effect of preventing the user's disadvantage such as that the content cannot be reproduced till the end against the user's intention.

**Further Information about Technical Background to this Application**

The disclosure of Japanese Patent Application No. 2003-101250 filed on April 4, 2003 including specification, drawings and claims is incorporated herein by reference in its entirety.

**Brief Description of Drawings**

These and other objects, advantages and features of the invention will become apparent from the following description thereof taken in conjunction with the accompanying drawings that illustrate a specific embodiment of the invention. In the Drawings:

FIG. 1 is a block diagram showing an overall structure of a digital content distribution system according to an embodiment of the present invention;
FIG. 2 is a diagram showing a structure of content data;

FIG. 3 is a diagram showing a structure of a right management server;

FIG. 4 is a diagram showing an example of user information data base;

FIG. 5 is a diagram showing an example of usage right data base;

FIG. 6 is a diagram showing once judgment threshold and longest usage time;

FIG. 7 is a diagram showing an example of a License Ticket (LT);

FIG. 8 is a diagram showing a structure of user terminal;

FIG. 9 is a diagram showing a structure of an LT issue request;

FIG. 10 is a flow chart showing operations in the case where a user terminal obtains an LT from a right management server;

FIG. 11 is a flow chart showing operations in the process of LT issue permission judgment;

FIG. 12A is a flow chart showing operations in the case where a user terminal reproduces content;

FIG. 12B is a flow chart showing operations in the case where a user terminal reproduces content;

FIG. 13 is a flow chart showing details of the first management process;

FIG. 14A is a flow chart showing details of the second management process;

FIG. 14B is a flow chart showing details of the third management process;

FIG. 14C is a flow chart showing details of the fourth management process;

FIG. 15 is a diagram showing an example of a usage right data base;

FIG. 16 is a diagram showing an example of an LT;

FIG. 17A is a diagram showing an example of a slide bar for reproduction position specification;

FIG. 17B is a diagram showing an example of a slide bar for reproduction position specification;

FIG. 18A is a diagram showing an example of a slide bar for reproduction position specification;

FIG. 18B is a diagram showing an example of a slide bar for reproduction position specification;

FIG. 19 is a diagram showing an example of a slide bar for reproduction position specification; and

FIG. 20 is a diagram showing an example of a slide bar for reproduction position specification.

## Best Mode for Carrying Out the Invention

An embodiment of the present invention will be explained using the drawings as follows.

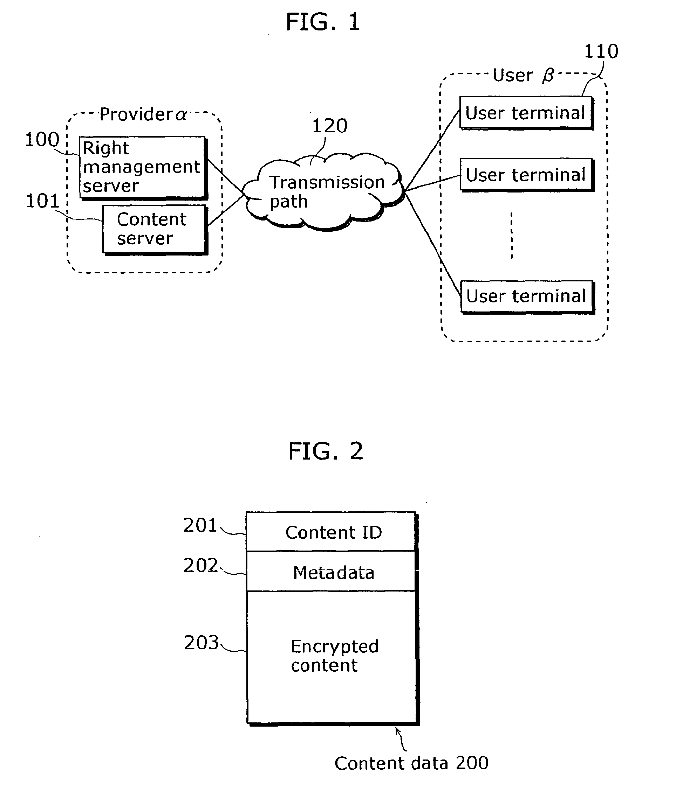

FIG. 1 is a block diagram showing an overall structure of a digital content distribution system according to an embodiment of the present invention. In FIG. 1, the digital content distribution system comprises: at least one right management server 100; at least one content server 101; at least one user terminal 110; and a transmission path 120, so as to prevent the user's disadvantage, in advance, such as that the content cannot be watched till the end.

The right management server 100 is set on the side of a provider α involved in the content distribution, and manages the usage right, for the content, of a user ß who receives a content distribution service. According to the request from the user terminal 110, the right management server 100 distributes a part or all of the usage right, as a License Ticket (LT) 700, to the user terminal 110. The provider α is called a content provider or a service provider.

As well as the right management server 100, the content server 101 is set on the side of the provider α, and distributes content data 200, as shown in FIG. 2, to the user terminal 110. As shown in FIG. 2, the content data 200 includes: a content ID 201; metadata 202; and encrypted content 203. The content ID 201 uniquely specifies content in the digital content distribution system. The metadata 202 explains the details of content. And, a title, length and the like of the content are described in the metadata 202. The encrypted content 203 is encrypted content such as music data and video data. Here, the content is not limited to the music data and video data, and may be other digital contents such as an electronic newspaper, an electronic book, an electronic map, an electronic dictionary, a still image, a game, software for computer and the like. Also, according to the present embodiment, the right management server 100 and the content server 101 are set on the side of the same provider α. However, the provider who operates the right management server 100 and the provider who operates the content server 101 may be different.

The user terminal 110 receives a content distribution service, and is set on the side of the user ß.

The transmission path 120 is a cable or wireless transmission path, and connects the right management server 100, the content server 101 and the user terminal 110 so as to enable data communication.

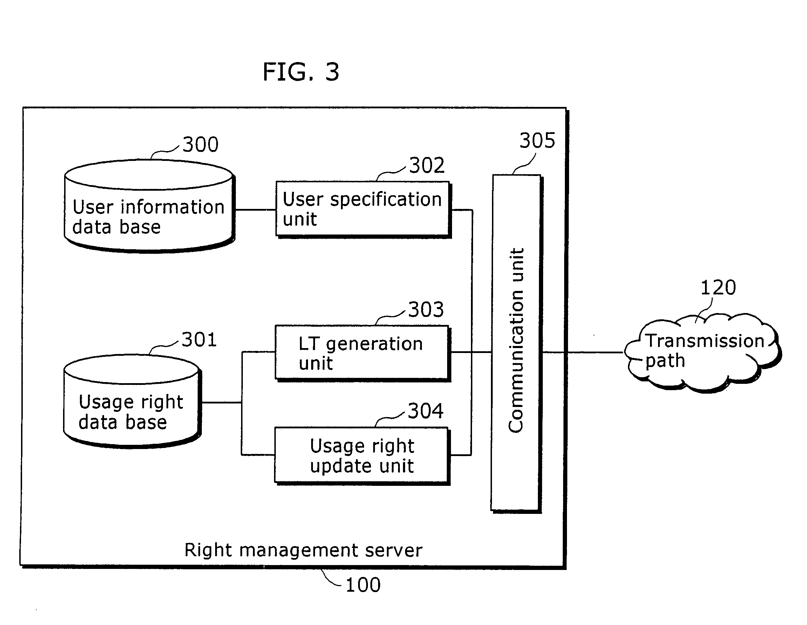

FIG. 3 is a block diagram showing a specific structure of the right management server 100. In FIG. 3, the right management server 100 includes: a user information data base 300; a usage right data base 301; a user specification unit 302; an LT generation unit 303; a usage right update unit 304; and a communication unit 305.

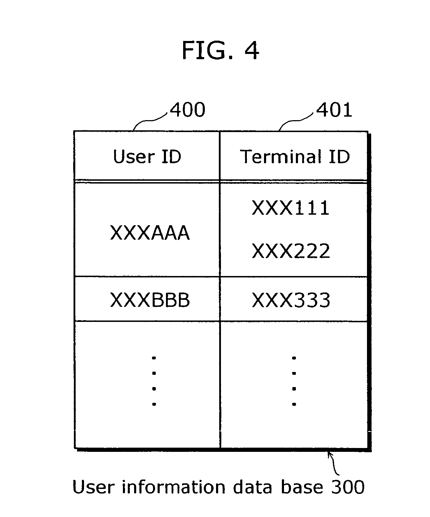

The user information data base 300 stores a user ID and a terminal ID which are associated with each other. An example of the user information data base 300 is shown in FIG. 4. In FIG. 4, the user ID 400 uniquely specifies a user ß in the digital content distribution system. The terminal ID 401 uniquely specifies a user terminal 110 in the digital content distribution system. The user information data base 300 manages which user terminal 110 the user ß owns. For example, FIG. 4 shows that the user ß specified by the user ID "XXXAAA" owns two terminals respectively having a terminal ID "XXX111" and a terminal ID "XXX222".

Data is registered into the user information data base 300 when a user ß executes a membership register process in order to receive a content distribution service operated by a provider α. This membership register process may be executed by the user ß, communicating with the provider α through the transmission path 120. And, the membership register process may be executed by other methods such as sending a document for the membership register. In the membership register process, first, the provider α assigns the user β with the user ID 400. After that, the terminal ID 401 of the user terminal 110 owned by the user β is notified to the provider α using communication or document. Then, the notified terminal ID 401 and the user ID 400 assigned to the user ß are associated with each other, so as to be registered into the user information data base 300. As a result of the above mentioned membership register process, the user information data base 300 as shown in FIG. 4 is built.

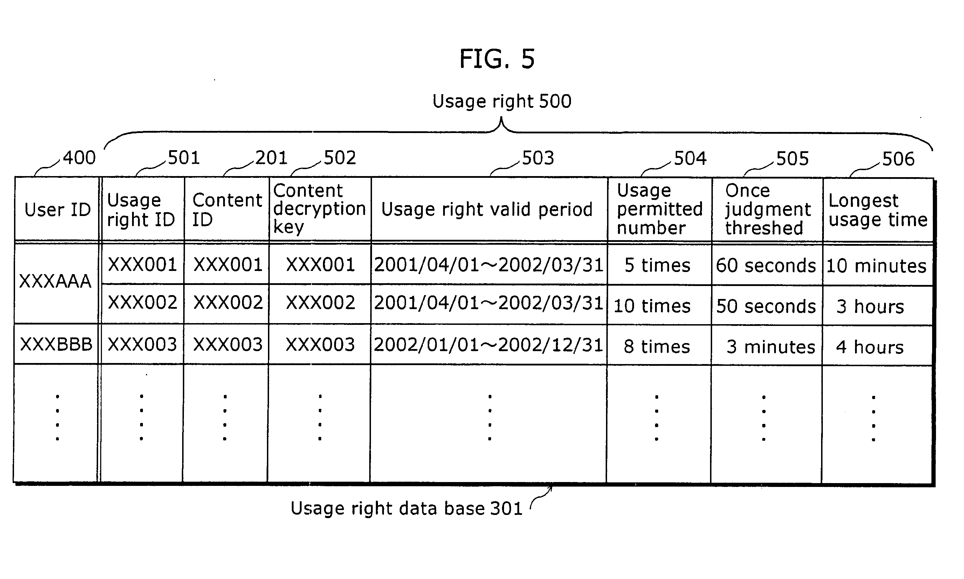

The usage right data base 301 manages the user ID and the usage right of the content purchased by the user ß which are associated with each other. FIG. 5 shows an example of user IDs and usage rights managed by the usage right data base 301. As shown in FIG. 5, a usage right 500 includes: a usage right ID 501; a content ID 201; a content decryption key 502; a usage right valid period 503; a usage permitted number 504; a once judgment threshold 505; and the longest usage time 506.

The usage right ID 501 uniquely specifies the usage right 500 in the digital content distribution system. In the content ID 201, the ID of the content to which the usage right 500 is applied is described. The content decryption key 502 decrypts the content specified by the content ID 201. The usage right valid period 503 indicates a period when the usage right 500 is valid. The usage permitted number 504 indicates the number of times that content can be used. The once judgment threshold 505 is a condition for judging whether or not content has been used once. In the case where content is used in the user terminal 110 for a longer period than the time specified by the once judgment threshold 505, it is judged that the content has been used once. The longest usage time 506 indicates the longest time for which content can be used. Within the time specified by the longest usage time 506, a user β can use content in a flexible form only to consume the usage right of once, while pausing, changing reproduction position (forwarding and rewinding), and the like.

FIG. 5 shows a situation in which, for example, (i) the user β whose user ID 400 is specified as "XXXAAA" owns two usage rights 500 whose usage right IDs 501 are respectively "XXX001" and "XXX002", (ii) the usage right 500 whose usage right ID 501 is "XXX001" is the right for the content whose content ID 201 is "XXX001", (iii) the content decryption key 502 for decrypting the content is "XXX001", (iv) the valid period of the usage right is "2001/04/01-2002/03/31", (v) the content reproduction permitted number is "five times", (vi) the once judgment threshold 505 is "sixty seconds", and (vii) the longest usage time 506 is "ten minutes".

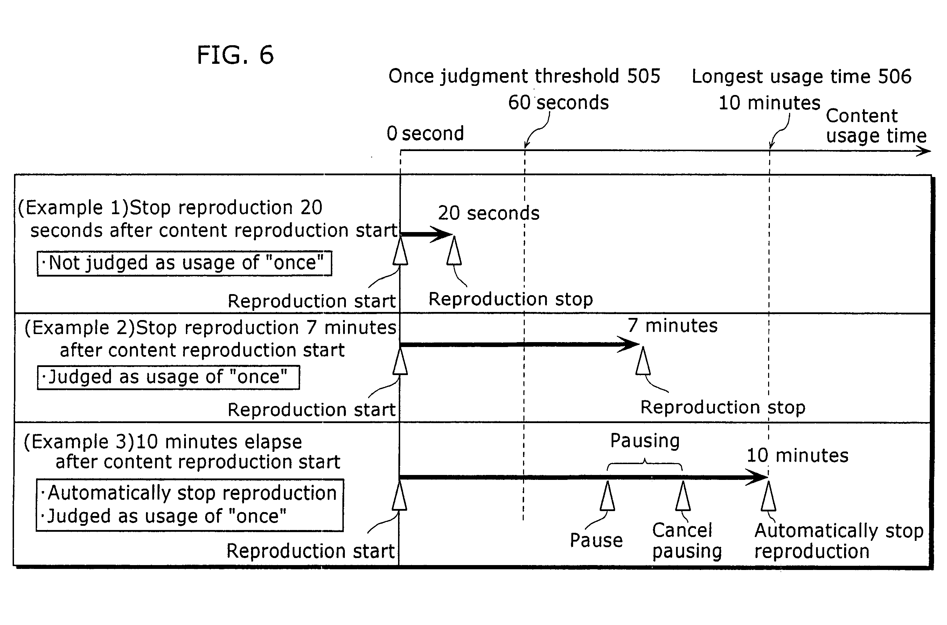

FIG. 6 shows how content usage of once is managed according to the once judgment threshold 505 and the longest usage time 506. In FIG. 6, (example 1) shows the case where reproduction is stopped when twenty seconds elapse after the user terminal 110 starts the content reproduction. In such case as described above, since the user terminal 110 uses the content only for the shorter period than the time (sixty seconds) specified by the once judgment threshold 505, this usage is not judged as once. On the other hand, in (example 2), reproduction is stopped when seven minutes elapse after the user terminal 110 starts the content reproduction. In such case as described above, since the user terminal 110 uses the content for a longer period than the time (sixty seconds) specified by the once judgment threshold 505, this usage is regarded as once. Also, in (example 3), the user terminal 110 automatically stops reproduction when the time (ten minutes) specified by the longest usage time 506 elapses after the user terminal starts the content reproduction. In such case as described above as well, since the user terminal 110 uses the content for a longer period than the time (sixty seconds) specified by the once judgment threshold 505, it is judged that the content has been used once. In (example 3), the time when the content reproduction is paused exists. The present embodiment will be explained, assuming that the pausing time is also calculated as the content usage time. Similarly, according to the present embodiment, the time when special reproduction such as rewinding and forwarding is executed is also calculated as the content usage time.

As described above, according to the present embodiment, the time when pausing and special reproduction are executed is included in the content usage time. However, whether or not to include the above mentioned time in the content usage time can be freely determined by the provider α. For example, the following managements are possible: (i) the time when pausing and special reproduction are executed is not included in the content usage time, or (ii) the time when reproduction of double speed is executed is included in the content usage time, but the time when pausing and special reproduction are executed is not included in the content usage time.

The user specification unit 302 (i) receives the terminal ID 401 transmitted from the user terminal 110, (ii) refers to the user information data base 300 based on the received terminal ID 401, so as to specify the user β.

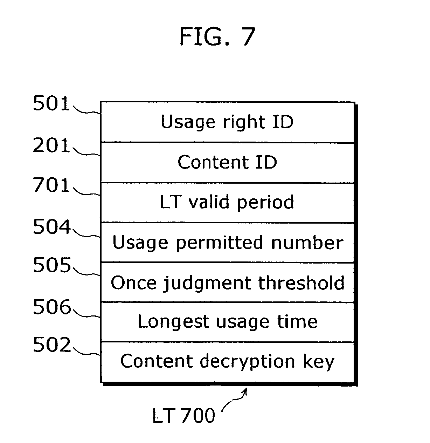

The LT generation unit 303 generates an LT 700 as shown in FIG. 7 from the usage right 500 managed by the usage right data base 301. As shown in FIG. 7, the LT 700 includes: a usage right ID 501; a content ID 201; an LT valid period 701; a usage permitted number 504; a once judgment threshold 505; the longest usage time 506; and a content decryption key 502. In the usage right ID 501, the usage right ID 501 of the usage right 500 which is the base for issuing the LT 700 is described. In the content ID 201, the content ID 201 which can be reproduced by using the LT 700 is described. In the LT valid period 701, the period when the LT 700 is valid is described. In the usage permitted number 504, the number of times that content can be reproduced is described. In the once judgment threshold 505, a condition for judging whether or not content has been used once is described. In the longest usage time 506, the information indicating the longest time for which content can be used is described. In the content decryption key 502, the key for decrypting content is described. The LT 700 is transmitted from the right management server 100 to the user terminal 110. And, the user terminal 110 uses the LT 700 so as to reproduce content.

In the case where the LT 700 is issued to the user terminal 110, the usage right update unit 304 updates the details of the usage right 500 stored in the usage right data base 301.

The communication unit 305 communicates with the user terminal 110 through the transmission path 120.

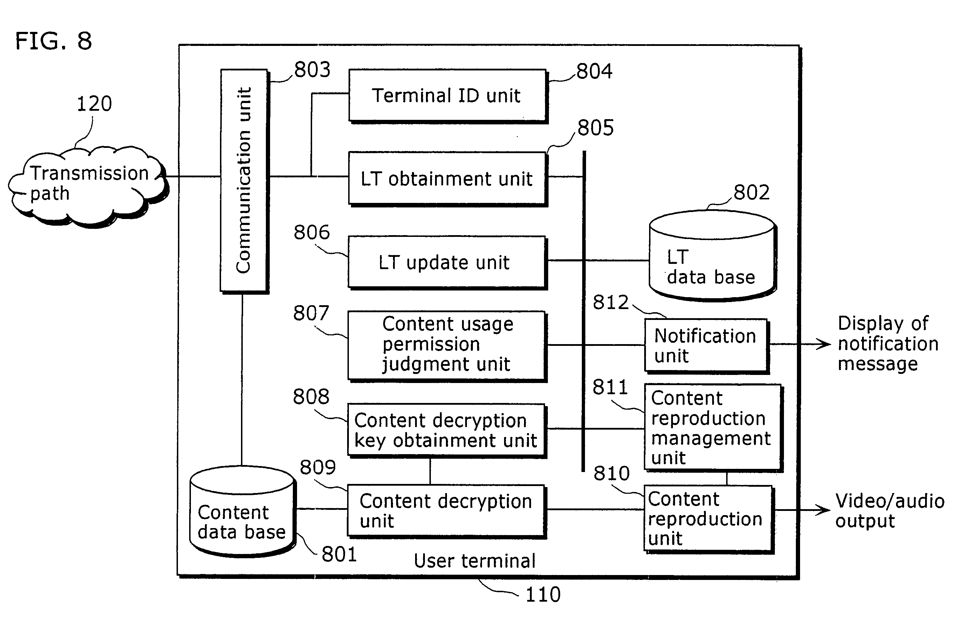

Next, referring to FIG. 8, the specific structure of the user terminal 110 will be explained. In FIG. 8, the user terminal 110 includes: a content data base 801; an LT data base 802; a communication unit 803; a terminal ID unit 804; an LT obtainment unit 805; an LT update unit 806; a content usage permission judgment unit 807; a content decryption key obtainment unit 808; a content decryption unit 809; a content reproduction unit 810; a content reproduction management unit 811; and a notification unit 812. Each component of the user terminal 110 will be explained as follows.

The content data base 801 manages content data 200 distributed from the content server 101.

The LT data base 802 manages the LT 700 issued from the right management server 100.

The communication unit 803 communicates with the right management server 100 and the content server 101 through the transmission path 120.

The terminal ID unit 804 holds the terminal ID 401 which uniquely specifies the user terminal 110.

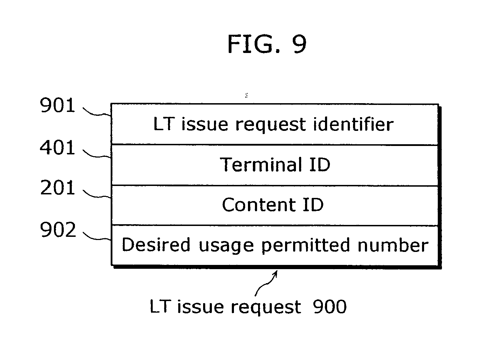

The LT obtainment unit 805 obtains the LT 700 from the right management server 100. The LT obtainment unit 805 (i) generates an LT issue request 900 as shown in FIG. 9, and (ii) transmits the LT issue request 900 to the right management server 100, so as to obtain the LT 700. In FIG. 9, the LT issue request 900 includes: an LT issue request identifier 901; a terminal ID 401; a content ID 201; and a desired usage permitted number 902. In the LT issue request identifier 901, information indicating that the current data is the LT issue request 900 is described. In the terminal ID 401, the terminal ID 401 of the user terminal 110 which issues the LT issue request 900 is described. In the content ID 201, the content ID 201 of the content which is reproduced using the obtained LT 700 is described. In the desired reproduction permitted number 902, the value desired to be set as the usage permitted number 504 for the obtained LT 700 is described.

The LT update unit 806 updates the details of the LT 700 stored in the LT data base 802. Specifically, after the content is reproduced, the value of the usage permitted number 504 in the LT 700 is deducted by one.

The content usage permission judgment unit 807 refers to the LT valid period 701 and the usage permitted number 504 in the LT 700, so as to judge whether or not the content can be reproduced. The content usage permission judgment unit 807 judges that in the case where the current time is within the LT valid period, and the value of the usage permitted number 504 is one or more, the content can be reproduced.

The content decryption key obtainment unit 808 obtains the content decryption key 502 for decrypting content from the LT 700 stored in the LT data base 802.

The content decryption unit 809 extracts the content data 200 from the content data base 801, so as to decrypt the extracted content data 200 using the content decryption key 502 obtained by the content decryption obtainment unit 808.

The content reproduction unit 810 reproduces the content decrypted by the content decryption unit 809, and music and video are outputted by the speaker and display that are not shown in the drawing.

The content reproduction management unit 811 measures and manages the content reproduction situation. Specifically, the content reproduction management unit 811 measures the content usage time, and manages the content usage of once based on the once judgment threshold 505 and the longest usage time 506 as described above in reference to FIG. 6. Moreover, in the case where against the user β's intention, the content may not be used till the end, the content reproduction management unit 811 warns the user β. Specifically, the content reproduction management unit 811 manages the rewind limit position. And, in the case where the user β directs, by a rewinding operation and the like, to forward the content reproduction position to the front of the rewind limit position, the content reproduction management unit 811 warns, through the notification unit 812, that if the reproduction is continued from the specified position, the content cannot be reproduced till the end. Here, the rewind limit position is indicated using the offset time from the content head. In the case where the content is continuously reproduced from the front of the rewind limit position, before the content is reproduced till the end, the content usage time reaches the longest usage time 506, and the content cannot be reproduced till the end. The rewind limit position can be calculated by the following (equation 1).

$$\text{(rewind limit position)} = \text{(content length)} - \{\text{(longest usage time)} - \text{(content usage time)}\} \quad \text{(equation 1)}$$

The notification unit 812 notifies various messages to the user β.

The operations of the digital content distribution system structured as described above according to the present embodiment will be explained as following.

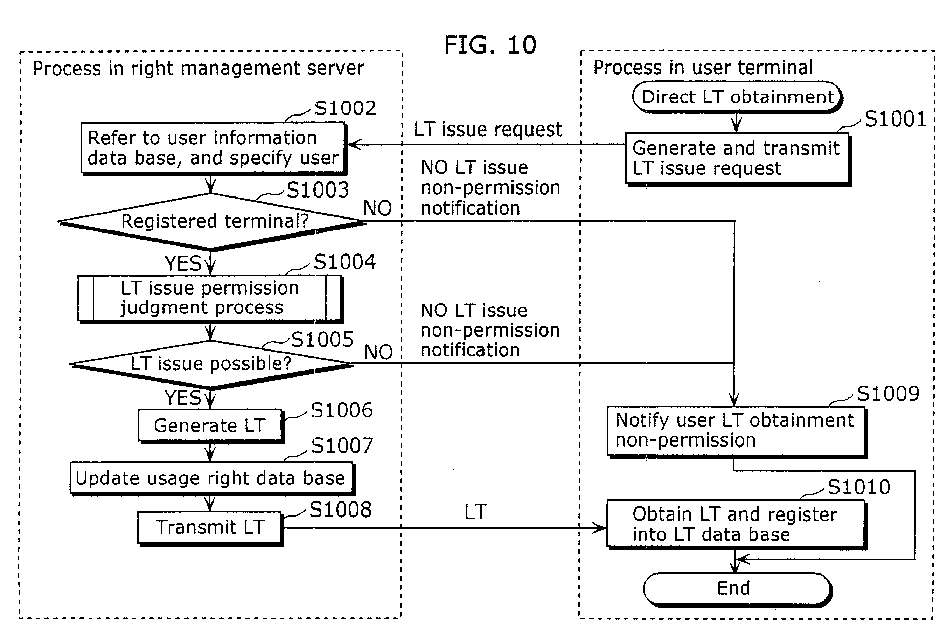

First, referring to a flow chart in FIG. 10, operations in the case where the user terminal 110 obtains the LT 700 from the right management server 100 in the digital content distribution system according to the present embodiment will be explained.

S1001: The LT obtainment unit 805 receives an LT obtainment direction from the user β through the user operation input unit such as a key board which is not shown in the drawing. The LT obtainment direction from the user β includes: the content ID 201 of the content whose LT 700 is obtained by the user β, and desired to be reproduced; and information which specifies the value to be described in the desired usage permitted number 902 included in the LT issue request 900. The LT obtainment unit 805 generates the LT issue request 900 according to the LT obtainment direction from the user β, and transmits the LT issue request 900 to the right management server 100 through the communication unit 803. Here, in the terminal ID 401 of the LT issue request 900, the terminal ID 401 held by the terminal ID unit 804 is set. In the content ID 201, the content ID 201 included in the LT obtainment direction from the user β is set. In the desired usage permitted number 902, the value specified by the LT obtainment direction from the user β is set.

S1002: When receiving the LT issue request 900, the user specification unit 302 refers to the user information data base 300 based on the terminal ID 401 included in the LT issue request 900, so as to specify the user β who desires the issue of the LT 700.

S1003: In the case where the user β cannot be specified in S1002, that is, in the case where the terminal ID 401 included in the LT issue request 900 is not registered in the user information data base 300, the user specification unit 302 notifies the user terminal 110 that the LT issue is not permitted. In the case where the user β is specified, the process is advanced to S1004.

S1004: The LT generation unit 303 executes a later explained LT issue permission judgment process, so as to specify the usage right 500 which is the base for issuing the LT 700, and judges whether or not the LT 700 can be issued.

S1005: In S1004, in the case where it is judged that the LT issue is not permitted, the LT generation unit 303 notifies the user terminal 110 that the LT issue is not permitted. In S1004, in the case where it is judged that the LT issue is permitted, the process is advanced to S1006.

S1006: The LT generation unit 303 generates the LT 700 based on the LT issue request 900. Here, in the content ID 201 within the generated LT 700, the content ID 201 included in the LT issue request 900 is set. In the LT valid period 701, the value of the usage right valid period 503 specified in S1004 is set. In the usage permitted number 504, the value of the desired usage permitted number 902 included in the LT issue request 900 is set. In the once judgment threshold 505, the value of the once judgment threshold 505 of the right usage 500 specified in S1004 is set. In the longest usage time 506, the value of the longest usage time 506 of the right usage 500 specified in S1004 is set. In the content decryption key 502, the value of the content decryption key 502 of the usage right 500 specified in S1004 is set.

S1007: The usage right update unit 304 updates the details of the usage right 500 specified in S1004. Specifically, the usage right update unit 304 executes the process in which the usage permitted number 504 of the usage right 500 specified in S1004 is deducted by the value of the usage permitted number 504 in the LT 700 generated by the LT generation unit 303.

S1008: The communication unit 305 transmits the LT 700 generated by the LT generation unit 303 in S1006 to the user terminal 110.

S1009: The LT obtainment unit 805 receives, through the communication unit 803, the LT 700 transmitted in S1008, and registers the received LT 700 into the LT data base 802. After that, the LT obtainment unit 805 notifies, through the notification unit 812, the user β that obtainment of the LT 700 has been completed, and ends the process.

S1010: In the case where it is judged that the LT issue is not permitted in S1003 and S1005, the LT obtainment unit 805 receives the LT issue non-permission notification from the right management server 100. In such case as described above, the LT obtainment unit 805 notifies, through the notification unit 812, the user β that the LT 700 could not be obtained, and ends the process.

In the S1001, the value specified by the user β is set in the desired reproduction permitted number 902 included in the LT issue request 900. However, in the desired reproduction permitted number 902, (i) a predetermined value which is not specified by the user β or (ii) the value judged as appropriate may be calculated by the LT obtainment unit 805 and set.

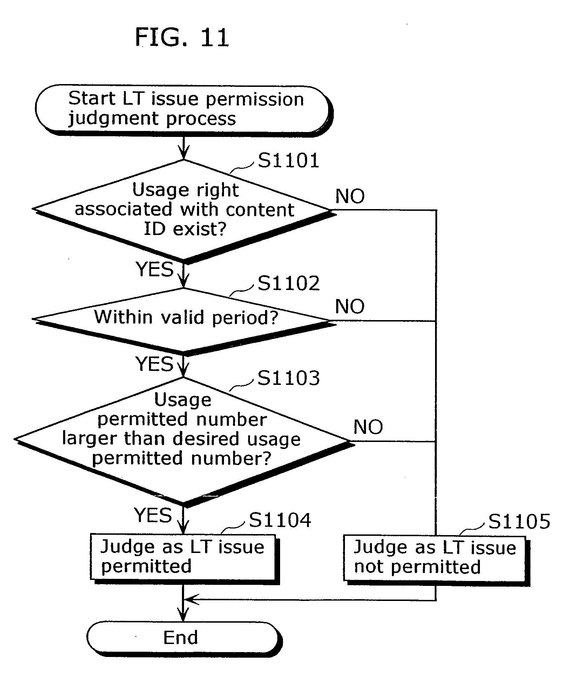

Next, using a flow chart in FIG. 11, the LT issue permission judgment process in S1004 in FIG. 10 will be explained. In the LT issue permission judgment process, it is judged whether or not the LT 700 can be issued.

S1101: The LT generation unit 303 refers to the usage right data base 301, and judges whether or not the user β specified by the user specification unit 302 in S1002 owns the usage right 500 for the content specified by the content ID 201 included in the LT issue request 900. Here, in the case where it is judged that the user β owns the usage right 500 for the content specified by the content ID 201 included in the LT issue request 900, the LT generation unit 303 specifies the usage right 500 as the usage right 500 which is the base for issuing the LT 700, and the process is advanced to S1102. In the case where it is judged that the user β does not own the usage right 500 for the content specified by the content ID 201 included in the LT issue request 900, the process is advanced to S1105.

S1102: The LT generation unit 303 refers to the usage right valid period 503 of the usage right 500 specified in S1101, and judges whether or not the current time is within the usage right valid period 503. Here, in the case where it is judged that the current time is within the usage right valid period, the process is advanced to S1103. In the case where it is judged that the current time is out of the usage right valid period 503, the process is advanced to S1105.

S1103: The LT generation unit 303 compares the usage permitted number 504 of the usage right 500 specified in S1101 to the desired usage permitted number 902 included in the LT issue request 900, and judges whether or not the usage permitted number 504 of the usage right 500 specified in S1101 is equal to or lager than the desired usage permitted number 902 included in the LT issue request 900. Here, in the case where it is judged that the usage permitted number 504 of the usage right 500 is equal to or larger than the desired usage permitted number 902 included in the LT issue request 900, the process is advanced to S1104. In the case where it is judged that the usage permitted number 504 of the usage right 500 is smaller than the desired usage permitted number 902 included in the LT issue request 900, the process is advanced to S1105.

S1104: The LT generation unit 303 judges that the LT 700 can be issued.

S1105: The LT generation unit 303 judges that the LT 700 cannot be issued.

In S1103, even in the case where the usage permitted number 504 of the usage right 500 is smaller than the desired usage permitted number 902 included in the LT issue request 900, if the usage permitted number 504 of the usage right 500 is one or larger, the process may be advanced to S1104, and it may be judged that the LT 700 can be issued. In such case as described above, the value of the usage permitted number 504 of the usage right 500 is set in the usage permitted number 504 in the LT 700 to be issued.

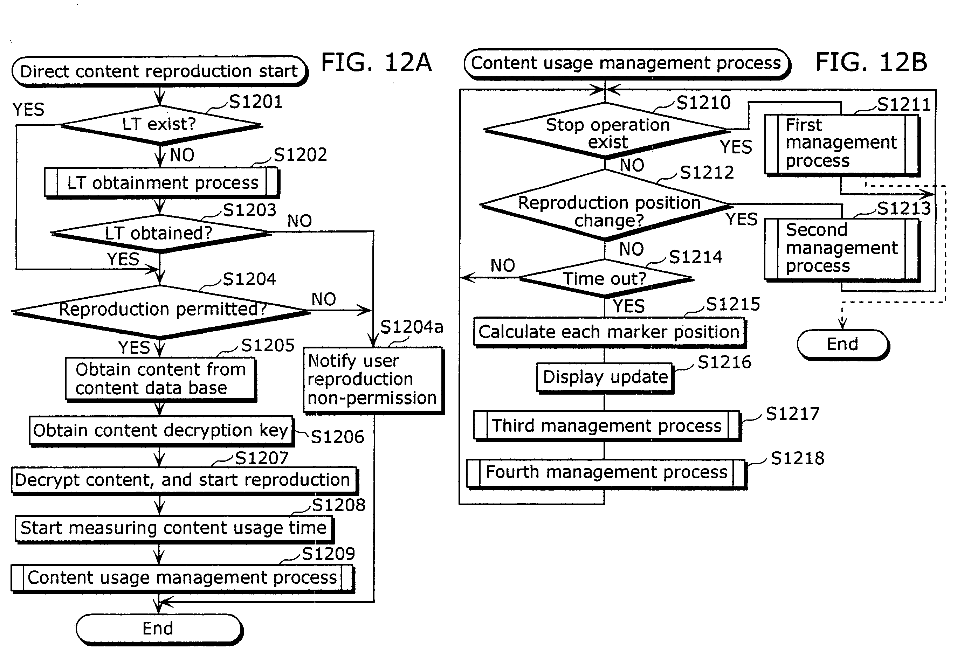

FIG. 12A is a flow chart showing operations of content reproduction in the user terminal 110.

S1201: The content usage permission judgment unit 807 receives, through a user operation input unit such as a keyboard and the like which is not shown in the drawing, a direction to start content reproduction from the user β. The direction to start content reproduction from the user β includes information specifying the content which the user β desires to be reproduced. The content usage permission judgment unit 807 checks whether or not the LT 700 associated with the content which the user β desires to be reproduced exists in the LT data base 802. In the case where the associated LT 700 exists, the process is advanced to S1204. In the case where the associated LT 700 does not exist, the process is advanced to S1202.

S1202: The LT obtainment process explained using FIG. 10 is executed.

S1203: As a result of executing the LT obtainment process, in the case where the LT 700 could not be obtained, the process is advanced to S1204a. In the case where the LT 700 could be successfully obtained, the process is advanced to S1204.

S1204: The content usage permission judgment unit 807 refers to the details of the LT 700 associated with the content which the user β desires to be reproduced, so as to judge whether or not the content can be reproduced. This judgment is executed by referring to the LT valid period 701 and the usage permitted number 504 within the LT 700. Specifically, in the case where the current time is within the LT valid period 701, and the value of the usage permitted number 504 is one or larger, the content usage permission judgment unit 807 judges that the content can be reproduced. In other cases than the above mentioned case, the content usage permission judgment unit 807 judges that the content cannot be reproduced. In the case where it is judged that the content cannot be reproduced, the process is advanced to S1204a.

S1204a: In the case where the LT700 could not be obtained in S1203, or in the case where it is judged that the content cannot be reproduced in S1204, the content usage permission judgment unit 807 notifies, through the notification unit 812, the user β that the content cannot be reproduced.

S1205: In the case where it is judged that the content cannot be reproduced in S1204, the content decryption unit 809 extracts, from the content data base 801, the content data 200 which the user β desires to be reproduced.

S1206: The content decryption key obtainment unit 808 extracts the content decryption key 502 from the LT700 associated with the content which the user β desires to be reproduced.

S1207: The content decryption unit 809 decrypts the encrypted content 203 included in the content data 200 extracted in S1206 using the content decryption key 502 obtained by the content decryption key obtainment unit 808 in S1206. After that, the content reproduction unit 810 reproduces the encrypted content 203 decrypted by the content decryption unit 809.

S1208: The content reproduction management unit 811 starts measuring the content usage time.

S1209: The content reproduction management unit 811 executes the content usage management process for preventing the user's disadvantage in content reproduction.

FIG. 12B is a flow chart showing the content usage management process (S1209 in FIG. 12A) in the user terminal 110

S1210: The content reproduction management unit 811 judges whether or not the user operation to direct the reproduction stop has been executed.

S1211: In the case where it is judged that there is no user operation to direct reproduction stop in S1210, the content reproduction management unit 811 executes the first management process. The first management process is a process to prevent user's disadvantage which may occur due to the reproduction stop operation. In the case where the reproduction is stopped in the first management process, the content management process as shown in FIG. 12B is finished. In the case where the reproduction is not stopped, the process is returned to S1210.

S1212: The content reproduction management unit 811 judges whether or not the user's operation to direct the change of the reproduction position has been executed.

S1213: In the case where it is judged that there is no user's operation to change the reproduction position in S1212, the content reproduction management unit 811 executes the second management process, in order to prevent user's disadvantage which may occur due to the operation of reproduction position change (forwarding or rewinding).

S1214: The content reproduction management unit 811 judges whether or not a periodic time out has occurred. A period may be a predetermined time such as several hundred ms or several seconds.

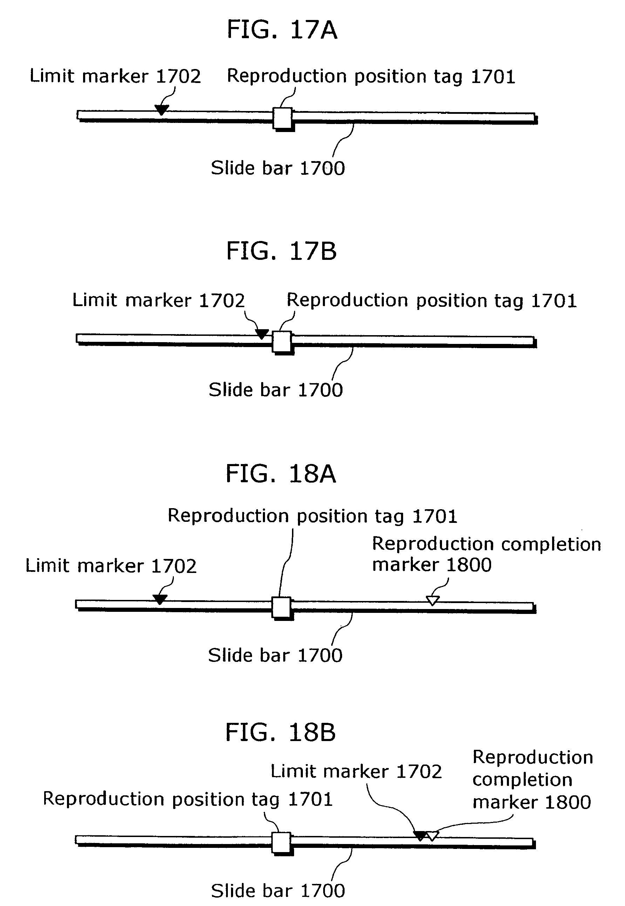

S1215: In the case where a time out occurs, first, the content reproduction management unit 811 calculates the position of each marker. As the markers, for example, as shown in FIG. 17A and FIG. 18A, there are: a current reproduction position display specific tag 1701 (also called a reproduction position tag); a rewind limit position display specific marker 1702 (also called a limit marker); a reproduction completion end position display specific marker 1800 (also called reproduction completion marker) and the like. And, the above mentioned markers are displayed along with the reproduction position specification specific slide bar 1700. In FIG. 17A, the reproduction position tag 1701 is a marker indicating the current reproduction position of content. A user β slides the reproduction position tag 1701 on the slide bar 1700 so as to change the content reproduction position to an arbitrary position. In stead of sliding the reproduction position tag, the reproduction position may be changed by pushing a forward and rewind buttons included in an operation panel or a remote control, or specifying time from the content head. The limit marker 1702 indicates the limit position where content cannot be reproduced till the end in the case where the reproduction position is moved to the front of the limit position. Thus, the user β can always know the rewind limit position. The reproduction completion marker 1800 indicates the end position of the completed reproduction in the case where the reproduction position is moved forward by the user's position change operation.

S1216: The content reproduction management unit 811 updates the display position of each marker displayed along with the slide bar 1700, according to the position of each marker calculated in the S1215.

S1217: Next, the content reproduction management unit 811 executes the third management process. The third management process prevents user's disadvantage which may be caused by a pausing operation and the like.

S1218: Moreover, the content reproduction management unit 811 executes the fourth management process. The fourth management process prevents user's disadvantage which may be caused in the case where reproduction is paused or the content is reproduced again by jumping to the position of completed reproduction due to the reproduction position change.

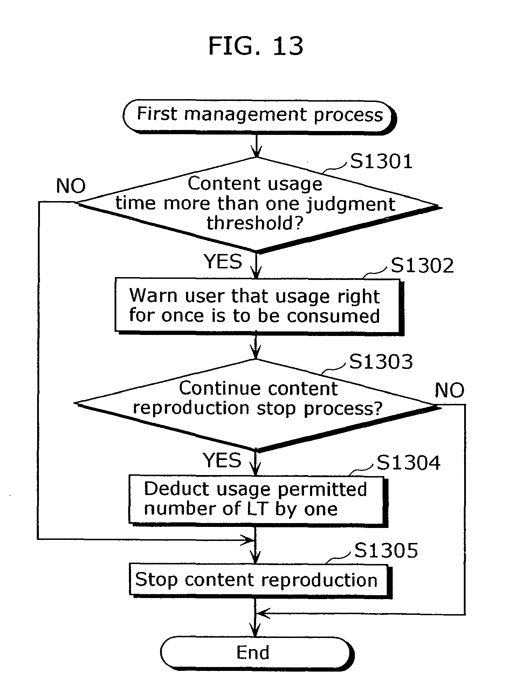

FIG. 13 is a flow chart specifically showing the first management process as shown in FIG. 12B.

S1301: When receiving a direction to stop content reproduction from the user β, through a user operation input unit which is not shown in the drawing, the content reproduction management unit 811 judges whether or not the content usage time is more than the one judgment threshold 505 of the LT 700 used for reproduction. In the case where the content usage time is more than the one judgment threshold 505, the process is advanced to S1302. In the case where the content usage time is less than the one judgment threshold 505, the process is advanced to S1305.

S1302: When stopping content reproduction through the notification unit 812, the content reproduction management unit 811 warns the user β that the usage right for once is to be consumed, and inquires the user β whether or not to continue the process of stopping content reproduction.

S1303: In response to the inquiry in the S1302, in the case where the user β directs not to continue the process of stopping content reproduction, the content reproduction is not stopped, and the process is finished. On the other hand, in the case where the user β directs to continue the process of stopping content reproduction, the process is advanced to S1304.

S1304: The LT update unit 806 deducts, by one, the usage permitted number 504 of the LT 700 used for reproduction.

S1305: The content reproduction unit 810 stops the content reproduction.

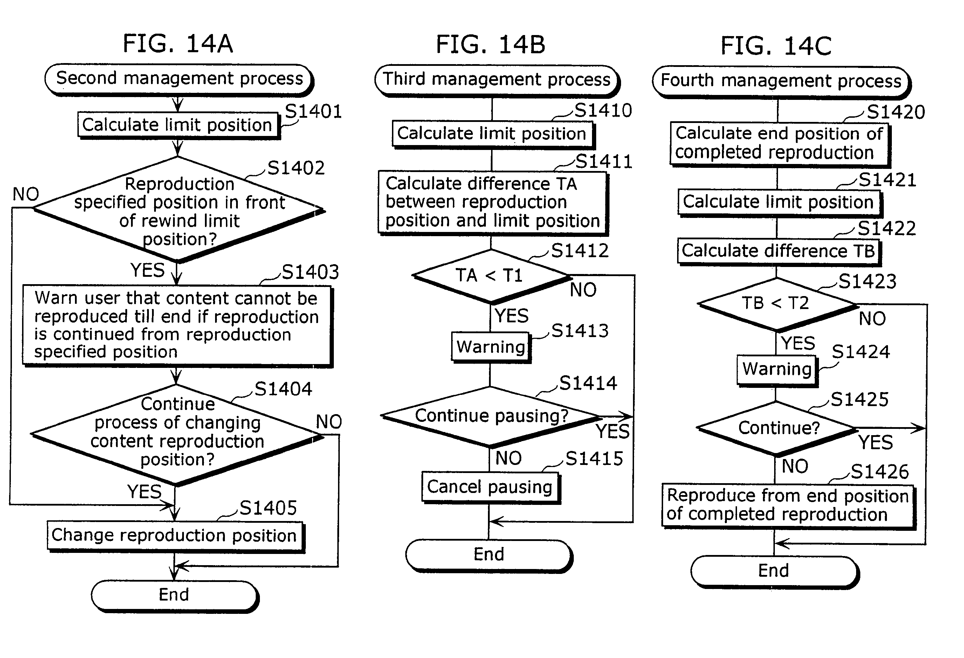

FIG. 14A is a flow chart specifically showing the second management process as shown in FIG. 12B. The second management process is executed in order to prevent user's disadvantage which may be caused by operation to change reproduction position (forwarding or rewinding).

S1401: 1 When receiving a direction to change content reproduction position from the user β, through a user operation input unit such as a remote control and keyboard, the content reproduction management unit 811 calculates a rewind limit position using the above mentioned (equation 1).

S1402: The content reproduction management unit 811 judges whether or not the reproduction specified position specified by the user β is in front of the rewind limit position calculated in the S1301. In the case where the reproduction specified position is in front of the rewind limit position, the process is advanced to S1403. In the case where the reproduction specified position is not in front of the rewind limit position, the process is advanced to S1405.

S1403: The content reproduction management unit 811 warns the user β through the notification unit 812 that content cannot be reproduced till the end in the case where the content reproduction position is changed to the specified position, and the reproduction is continued from the specified position. And, the content reproduction management unit 811 inquires the user β whether or not to continue the process of changing the content reproduction position.

S1404: In response to the inquiry in the S1403, in the case where the user β directs not to continue the process of changing the content reproduction position, the content reproduction position is not changed, and the process is ended. On the other hand, in the case where the user β directs to continue the process of changing the content reproduction position, the process is advanced to S1405.

S1405: The content reproduction unit 810 changes the reproduction position to the position specified by the user β

FIG. 14B is a flow chart specifically showing the third management process as shown in FIG. 12B. The third management process is executed in order to prevent user's disadvantage which may be caused by a pausing operation and the like.

S1410: As well as in S1401, the content reproduction management unit 811 calculates the rewind limit position.

S1411: The content reproduction management unit 811 calculates the difference TA between the current reproduction position and the rewind limit position. For example, as shown in FIG. 17A, the difference TA indicates the time between the current position and limit position. The difference TA does not decrease when normally reproducing. However, in the case where there is a state of pausing and rewinding during the content reproduction, the difference TA gradually decreases as shown in FIG. 17B. When the limit position exceeds the reproduction position, the content cannot be reproduced till the end, thereby the user's disadvantage occurs.

S1412: The content reproduction management unit 811 judges whether or not the difference TA is smaller than the threshold T1. For example, the threshold T1 may be several seconds to several tens of seconds. In the case where it is judged that the difference TA is larger than the threshold T1, the process is finished. In the case where it is judged that the difference TA is smaller than the threshold T1, the process is advanced to S1413.

S1413: The content reproduction management unit 811 displays the warning that the content cannot be reproduced till the end in the present state. For example, the content reproduction management unit 811 displays a message, "Unless pausing is cancelled within certain seconds, the content cannot be reproduced till the end. Do you cancel the pausing?" and the like, and prompts the user to answer.

S1414: The content reproduction management unit 811 judges the existence and details of the user's answer. In the case where there is no user's answer, and there is an answer that the pausing should not be cancelled, the process is ended. In the case where there is an answer that the pausing should be cancelled, the process is advanced to S1415.

S1415: The content reproduction management unit 811 cancels pausing and restarts a normal reproduction.

Thus, the disadvantage that the content end cannot be reproduced can be solved.

FIG. 14C is a flow chart specifically showing the fourth management process as shown in FIG. 12B. The fourth management process is executed in order to prevent user's disadvantage which may occur in the case where the reproduction is paused, or the content is reproduced again by jumping to the position of the completed reproduction due to the reproduction position change.

S1420: The content reproduction management unit 811 calculates the end position of completed reproduction. The end position of completed reproduction is the current reproduction position in the case where the position is not changed (rewound) during the content reproduction. In the case where the position is changed (rewound) during the content reproduction, the end position of completed reproduction is the most advanced reproduction position among the reproduction positions before the position change.

S1421: As well as the S1401, the content reproduction management unit 811 calculates the rewind limit position.

S1422: The content reproduction management unit 811 calculates the difference TB between the current reproduction position and the rewind limit position. For example, as shown in FIG. 18A, the difference TB indicates the time between the end position of completed reproduction and the limit position. In the case where the content is reproduced or paused from the changed (rewound) position, the difference TB gradually decreases as shown in FIG. 18B. When the limit position exceeds the end position of completed reproduction, the content cannot be reproduced till the end, thereby the user's disadvantage occurs.

S1423: The content reproduction management unit 811 judges whether or not the difference TB is smaller than the threshold T2. For example, the threshold T2 may be several seconds to several tens of seconds. In the case where it is judged that the difference TB is larger than the threshold T2, the process is ended. In the case where it is judged that the difference TB is smaller than the threshold T2, the process is advanced to S1424.

S1424: The content reproduction management unit 811 displays the warning that the content cannot be reproduced till the end in the present state. For example, the content reproduction management unit 811 displays a message, "Unless reproduction is started from the end position within certain seconds, the content cannot be reproduced till the end. Do you start the reproduction from the end position?", and prompts the user to answer.

S1425: The content reproduction management unit 811 judges the existence and details of the user's answer. In the case where there is no user's answer, and there is an answer that the content is not reproduced from the end position of the completed reproduction, the present process is ended. In the case where there is an answer that the content is reproduced from the end position of the completed reproduction, the process is advanced to S1426.

S1426: The content reproduction management unit 811 executes control so that the content is reproduced from the end position of the completed reproduction. Thus, the disadvantage that the content end cannot be reproduced can be solved.

As described above, according to the user terminal 110 of the present invention, occurrence of the user's disadvantage can be predicted and warned in advance, the disadvantage being that the content cannot be reproduced till the end and the like due to the user's operation such as position change and pausing. Thus, the user's disadvantage, against the user's intention, such as that the content cannot be used till the end can be prevented in advance.

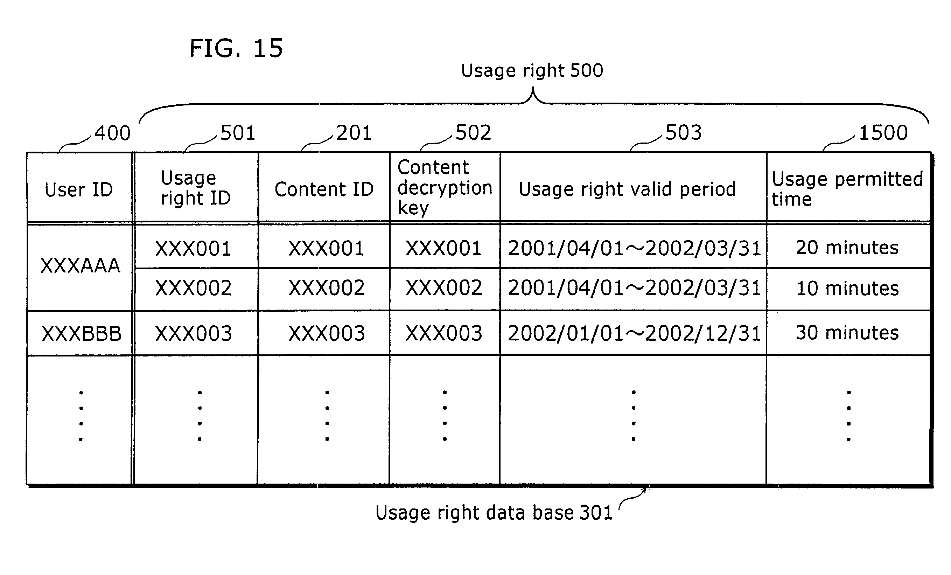

As shown in FIG. 15, the usage right 500 stored in the usage right data base 301 may not include the usage permitted number 504, once judgment threshold 505 and the longest usage time 506, but may include a usage permitted time 1500 instead. In the case of the longest usage time 506, when reproduction is stopped in the middle of the content reproduction, the content cannot be reproduced any more even if there is remaining time. On the other hand, the usage permitted time 1500 indicates how much time and content can be used. The usage permitted time 1500 is information indicating a total time which does not include reproduction stopping time, even if the reproduction is stopped, or the user terminal is turned off in the middle of the content reproduction. For example, FIG. 15 shows that the usage right 500 whose usage right ID 501 is "XXX001" is the right for which the content can be used for twenty minutes.

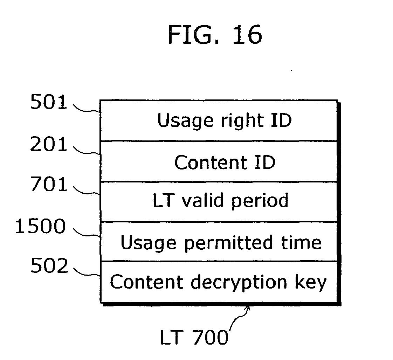

In the case where the usage right 500 has the format as shown in FIG. 15, the LT 700 as well, as shown in FIG. 16, does not include the usage permitted number 504, once judgment threshold 505 and the longest usage time 506, but includes a usage permitted time 1500 instead. In such case as described above, the rewind limit position managed by the content reproduction management unit 811 can be calculated using the following (equation 2).

$$\text{(rewind limit position)}=\text{(content length)}-\{\text{(usage permitted time)}-\text{(content usage time)}\} \qquad \text{(equation 2)}$$

In the present embodiment, the content reproduction management unit 811 notifies the user β of the warning message according to need in the content reproduction stop process and the content reproduction position change process. However, the notification of the warning message is not limited to during the above mentioned processes. And, in the case where there is a possibility that the content may not be used till the end, against the user β's intention, the warning message may be notified to the user β in other time than the above mentioned processes.

For example, when starting content usage, the content reproduction management unit 811 may (i) calculate the rewind limit position using (equation 1) and (equation 2) in the predetermined intervals or timings, (ii) compare the calculated rewind limit position and the current reproduction position, so as to warn the user β according to need. In such case, for example, in the case where the user β pauses reproduction for a long time during the content usage, when the rewind limit position approaches the pausing position, it can be warned that the content cannot be reproduced till the end unless the pausing is cancelled.

Also, the content reproduction management unit 811 may manage, along with the rewind limit position, an end position of the completed reproduction which is information indicating how much the content has been reproduced. In such case, when the rewind limit position approaches the end position of completed reproduction, the content reproduction management unit 811 can warn the user β that unless the reproduction is started from the end position of the completed reproduction immediately, the content cannot be reproduced till the end. In such case, when warning, the content reproduction management unit 811 may have a function of having the content reproduction position jump to the end position of completed reproduction, automatically or according to the user β's direction. In addition, in the case where the content reproduction management unit 811 manages the end position of completed reproduction, as shown in FIG. 18, the end position of completed reproduction display specific marker 1800 may be displayed on the reproduction position specification specific slide bar 1700.

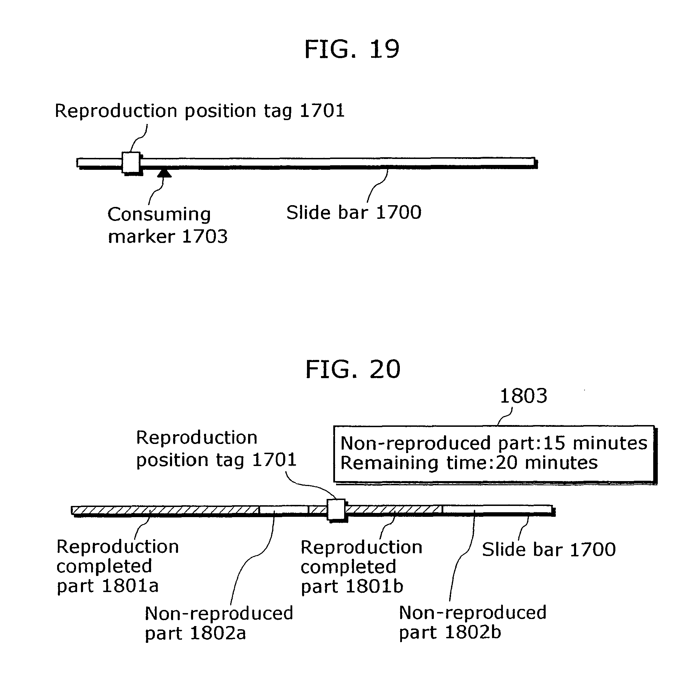

In the display update step S1216 as shown in FIG. 12B, the content reproduction management unit 811 may execute control so as to display the consuming marker 1703 as shown in FIG. 19. The consuming marker 1703 is a marker indicating the position of the once judgment threshold 505. According to this display, the user can easily recognize the reproduction position up to where the right for using the content once would be consumed.

Moreover, in the display update step S1216 as shown in FIG. 12B, the content reproduction management unit 811 may execute control so as to display the slide bar as shown in FIG. 20. In FIG. 20, reproduced parts 1801a and 1801b show the reproduced section. The non-reproduced parts 1802a and 1802b show the non-reproduced sections. For example, the non-reproduced part 1802a is not reproduced due to the jump of position change operation. The warning box 1803 displays a total time of actual reproduction part and available remaining time. Other markers are omitted in the drawing. Thus, when the user desires to reproduce content while freely changing the reproduction position, the content can be reproduced without content reproduction failure.

In the S1415 in FIG. 14B and S1426 in FIG. 14C, in the case where a plurality of non-reproduced parts exist like the slide bar display as shown in FIG. 20 and the like, the content reproduction management unit 811 may execute control so as to automatically reproduce the actual reproduction parts in sequence.

Also, in the step S1404 and S1405 as shown in FIG. 14A, the content reproduction management unit 811 may cancel the position change by the user's operation without waiting for the user's answer. Otherwise, the reproduction may be executed from the limit position instead of the reproduction position specified by the user's operation.

Moreover, in the present embodiment, when detecting a situation that against the user β's intention, the content may not be used till the end, the content reproduction management unit 811 warns the user β. However, the content reproduction management unit 811 may not warn the user β, but prohibit the user β's operation which causes the situation.

Although only an exemplary embodiment of this invention has been described in detail above, those skilled in the art will readily appreciate that many modifications are possible in the exemplary embodiment without materially departing from the novel teachings and advantages of this invention. Accordingly, all such modifications are intended to be included within the scope of this invention.

## Industrial Applicability

The present invention is suitable for content reproduction apparatuses which reproduce content according to the usage rules of the content included in license information. For example, the present invention is suitable for content reproduction apparatuses, storage apparatuses and complex devices thereof such as a set top box for receiving digital broadcast, a digital TV, a DVD recorder, a hard disk recorder and a personal computer.

## Claims

1. A digital content reproduction apparatus which reproduces content according to a usage rule of the content included in license information, the apparatus comprising:

   a detection unit operable to detect a reproduction state of content when the content is reproduced;
   a prediction unit operable to predict an occurrence of a user's disadvantage based on the usage rule and the reproduction state; and
   a warn unit operable to warn the user of a prediction in the case where it is predicted that the disadvantage would occur.

2. The content reproduction apparatus according to Claim 1,
   wherein said prediction unit is operable to make a prediction according to one of (a) a periodical time out, (b) a user's operation to change a reproduction position, (c) a user's operation to direct pausing and (d) a user's operation to direct stopping.

3. The content reproduction apparatus according to Claim 2,
   wherein the usage rule indicates a usage permitted time for which the content usage is permitted,
   said detection unit is operable to detect, as a usage state, a reproduction completed section of the content, and said prediction unit is operable to predict whether all of the content can be reproduced by comparing (i) a remaining time which is the usage permitted time deducted by an elapsed time to (ii) a time for a non-reproduced section of the content.

4. The content reproduction apparatus according to Claim 3,
   wherein the elapsed time is one of (a) an actual reproduction time excluding a pausing time and (b) an actual reproduction time including a pausing time.

5. The content reproduction apparatus according to Claim 3, further comprising
   a reproduction control unit operable to execute control so as to reproduce the non-reproduced section of the content according to a user's answer operation for the warning by said warn unit.

**6.** The content reproduction apparatus according to Claim 2,
wherein the usage rule indicates a usage permitted time for which the content usage is permitted,
said detection unit detects a current reproduction position and a rewind limit position of the content,
said prediction unit predicts that a disadvantage would occur when there is a user's operation to change the current reproduction position to a front of the limit position, and
the rewind limit position is a head position of a reproduction section including the content end, the reproduction section corresponding to a remaining time that is the usage permitted time deducted by an elapsed time.

**7.** The content reproduction apparatus according to Claim 6, further comprising
a cancel unit operable to cancel the user's operation to change a reproduction position according to a user's answer operation for the warning by said warn unit.

**8.** The content reproduction apparatus according to Claim 6, further comprising
a reproduction control unit operable to change the reproduction position to the rewind limit position according to a user's answer operation for the warning by said warn unit.

**9.** The content reproduction apparatus according to Claim 2,
wherein the usage rule includes a judgment rule for judging whether or not content is regarded to be watched once,
said detection unit is operable to detect the user's operation to direct a reproduction stop, and
said prediction unit is operable to predict that the user's disadvantage would occur in the case where when the user's operation is detected, the judgment rule is fulfilled.

**10.** The content reproduction apparatus according to Claim 9, further comprising
a cancel unit operable to cancel the user's operation to direct the reproduction stop, according to a user's answer to a presentation by a presentation unit.

**11.** A digital content reproduction method for reproducing content according to a usage rule of the content included in license information, the method comprising:

detecting a reproduction state of content when the content is reproduced;
predicting an occurrence of a user's disadvantage based on the usage rule and the reproduction state; and
warning a user of a prediction in the case where it is predicted that the disadvantage would occur.

**12.** The content reproduction method according to Claim 11,
wherein said prediction is made according to one of (a) a periodical time out, (b) a user's operation to change a reproduction position, (c) a user's operation to direct pausing and (d) a user's operation to direct stopping.

**13.** The content reproduction method according to Claim 12,
wherein the usage rule indicates a usage permitted time for which the content usage is permitted,
a reproduction completed section of the content is detected as a usage state, and
it is predicted whether all of the content can be reproduced by comparing (i) a remaining time which is the usage permitted time deducted by an elapsed time to (ii) a time for a non-reproduced section of the content.

**14.** The content reproduction method according to Claim 13,
wherein the elapsed time is one of (a) an actual reproduction time excluding a pausing time and (b) an actual reproduction time including a pausing time.

**15.** The content reproduction method according to Claim 13, further comprising
executing control so as to reproduce the non-reproduced section of the content according to a user's answer operation for the warning.

**16.** The content reproduction method according to Claim 12,
wherein the usage rule indicates a usage permitted time for which the content usage is permitted,
a current reproduction position and a rewind limit position of the content are detected,
it is predicted that a disadvantage would occur when there is a user's operation to change the current reproduction position to a front of the limit position, and
the rewind limit position is a head position of a reproduction section including the content end, the reproduction section corresponding to a remaining time that is the usage permitted time deducted by an elapsed time.

**17.** The content reproduction method according to Claim 16, further comprising
canceling the user's operation to change a reproduction position according to a user's answer operation for the warning.

**18.** The content reproduction method according to Claim 16, further comprising
changing the reproduction position to the rewind limit position according to a user's answer operation for the warning.

**19.** The content reproduction method according to Claim 12,
wherein the usage rule includes a judgment rule for judging a content reproduction of once,
the user's operation to direct a reproduction stop is detected, and
it is predicted that the user's disadvantage would occur in the case where when the user's operation is detected, the judgment rule is fulfilled.

**20.** The content reproduction method according to Claim 19, further comprising
canceling the user's operation to direct the reproduction stop, according to a user's answer to a presentation.

# FIG. 1

# FIG. 2

Content data 200

# FIG. 3

Right management server
- User information data base — 300
- User specification unit — 302
- Usage right data base — 301
- LT generation unit — 303
- Usage right update unit — 304
- Communication unit — 305
- 100
- Transmission path — 120

EP 1 613 085 A1

# FIG. 4

|  ⌐400 User ID | ⌐401 Terminal ID |
|---|---|
| XXXAAA | XXX111<br>XXX222 |
| XXXBBB | XXX333 |
| ⋮ | ⋮ |

User information data base 300

## FIG. 5

Usage right 500

| User ID | Usage right ID | Content ID | Content decryption key | Usage right valid period | Usage permitted number | Once judgment threshed | Longest usage time |
|---|---|---|---|---|---|---|---|
| XXXAAA | XXX001 | XXX001 | XXX001 | 2001/04/01～2002/03/31 | 5 times | 60 seconds | 10 minutes |
|  | XXX002 | XXX002 | XXX002 | 2001/04/01～2002/03/31 | 10 times | 50 seconds | 3 hours |
| XXXBBB | XXX003 | XXX003 | XXX003 | 2002/01/01～2002/12/31 | 8 times | 3 minutes | 4 hours |
| ⋮ | ⋮ | ⋮ | ⋮ | ⋮ | ⋮ | ⋮ | ⋮ |

400   501   201   502   503   504   505   506

Usage right data base 301

EP 1 613 085 A1

# FIG. 6

Once judgment threshold 505 — 60 seconds
Longest usage time 506 — 10 minutes

0 second — Content usage time

**(Example 1)** Stop reproduction 20 seconds after content reproduction start

·Not judged as usage of "once"

20 seconds

Reproduction start — Reproduction stop

**(Example 2)** Stop reproduction 7 minutes after content reproduction start

·Judged as usage of "once"

7 minutes

Reproduction start — Reproduction stop

**(Example 3)** 10 minutes elapse after content reproduction start

·Automatically stop reproduction
·Judged as usage of "once"

Pausing — 10 minutes

Reproduction start — Pause — Cancel pausing — Automatically stop reproduction

EP 1 613 085 A1

## FIG. 7

| |
|---|
| Usage right ID |
| Content ID |
| LT valid period |
| Usage permitted number |
| Once judgment threshold |
| Longest usage time |
| Content decryption key |

501
201
701
504
505
506
502

LT 700

FIG. 8

- 120 Transmission path
- 803 Communication unit
- 804 Terminal ID unit
- 805 LT obtainment unit
- 806 LT update unit
- 807 Content usage permission judgment unit
- 808 Content decryption key obtainment unit
- 809 Content decryption unit
- 801 Content data base
- 802 LT data base
- 812 Notification unit → Display of notification message
- 811 Content reproduction management unit
- 810 Content reproduction unit → Video/audio output
- 110 User terminal

EP 1 613 085 A1

# FIG. 9

| |
|---|
| LT issue request identifier |
| Terminal ID |
| Content ID |
| Desired usage permitted number |

901
401
201
902

LT issue request  900

# FIG. 10

Process in right management server | Process in user terminal

**Process in right management server**

S1002 — Refer to user information data base, and specify user

S1003 — Registered terminal?
- NO
- YES

S1004 — LT issue permission judgment process

S1005 — LT issue possible?
- NO
- YES

S1006 — Generate LT

S1007 — Update usage right data base

S1008 — Transmit LT

**Process in user terminal**

Direct LT obtainment

S1001 — Generate and transmit LT issue request

LT issue request

NO LT issue non-permission notification

NO LT issue non-permission notification

S1009 — Notify user LT obtainment non-permission

LT

S1010 — Obtain LT and register into LT data base

End

EP 1 613 085 A1

## FIG. 11

```
        ┌──────────────────────────────┐
        │  Start LT issue permission   │
        │      judgment process        │
        └──────────────────────────────┘
                      │
                      ▼         S1101
                  ╱───────╲
                 ╱ Usage    ╲        NO
                ╱ right       ╲────────────────┐
                ╲ associated   ╱                │
                 ╲with content╱                 │
                  ╲ID exist? ╱                  │
                   ╲───────╱                    │
                  YES │                         │
                      ▼         S1102           │
                  ╱───────╲                     │
                 ╱         ╲        NO           │
                ╱  Within   ╲────────────────┐  │
                ╲valid period?╱              │  │
                 ╲         ╱                  │  │
                  ╲───────╱                   │  │
                  YES │                       │  │
                      ▼         S1103         │  │
                  ╱───────╲                   │  │
                 ╱  Usage   ╲                 │  │
                ╱ permitted  ╲       NO        │  │
               ╱number larger ╲───────────┐   │  │
               ╲than desired  ╱            │   │  │
                ╲usage permitted╱          │   │  │
                 ╲  number? ╱              │   │  │
                  ╲───────╱                │   │  │
                  YES │    S1104           │   │  │  S1105
                      ▼                    ▼   ▼  ▼
            ┌──────────────────┐     ┌──────────────────┐
            │ Judge as LT issue│     │ Judge as LT issue│
            │ permitted        │     │ not permitted    │
            └──────────────────┘     └──────────────────┘
                      │                    │
                      ▼◄───────────────────┘
            ┌──────────────────┐
            │       End        │
            └──────────────────┘
```

## FIG. 12A

**Direct content reproduction start**

YES ← **LT exist?** — S1201
NO ↓

**LT obtainment process** — S1202

↓

**LT obtained?** — S1203 — NO →
YES ↓

**Reproduction permitted?** — S1204 — NO →
YES ↓ — S1205

**Obtain content from content data base**

**Notify user reproduction non-permission** — S1204a

↓

**Obtain content decryption key** — S1206

↓

**Decrypt content, and start reproduction** — S1207

↓

**Start measuring content usage time** — S1208

↓

**Content usage management process** — S1209

↓

**End**

## FIG. 12B

**Content usage management process**

↓

**Stop operation exist** — S1210 — YES → **First management process** — S1211
NO ↓

**Reproduction position change?** — S1212 — YES → **Second management process** — S1213
NO ↓

NO ← **Time out?** — S1214
YES ↓

**Calculate each marker position** — S1215

↓

**Display update** — S1216

↓

**Third management process** — S1217

↓

**Fourth management process** — S1218

**End**

EP 1 613 085 A1

# FIG. 13

First management process

S1301

NO
Content usage
time more than one judgment
threshold?

YES

S1302

Warn user that usage right
for once is to be consumed

S1303

Continue content
reproduction stop process?

NO

YES

S1304

Deduct usage permitted
number of LT by one

S1305

Stop content reproduction

End

## FIG. 14A

( Second management process )

Calculate limit position ⟋S1401

◇ Reproduction specified position in front of rewind limit position? ⟋S1402 — NO

YES ↓ ⟋S1403

Warn user that content cannot be reproduced till end if reproduction is continued from reproduction specified position

◇ Continue process of changing content reproduction position? ⟋S1404 — NO

YES ↓ ⟋S1405

Change reproduction position

( End )

## FIG. 14B

( Third management process )

Calculate limit position ⟋S1410

Calculate difference TA between reproduction position and limit position ⟋S1411

◇ TA < T1 ⟋S1412 — NO

YES ↓

Warning ⟋S1413

◇ Continue pausing? ⟋S1414 — YES

NO ⟋S1415

Cancel pausing

( End )

## FIG. 14C

( Fourth management process )

Calculate end position of completed reproduction ⟋S1420

Calculate limit position ⟋S1421

Calculate difference TB ⟋S1422

◇ TB < T2 ⟋S1423 — NO

YES ↓ S1424

Warning

◇ Continue? ⟋S1425 — YES

NO ⟋S1426

Reproduce from end position of completed reproduction

( End )

EP 1 613 085 A1

## FIG. 15

EP 1 613 085 A1

Usage right 500

| User ID | Usage right ID | Content ID | Content decryption key | Usage right valid period | Usage permitted time |
|---------|----------------|------------|------------------------|--------------------------|----------------------|
| XXXAAA | XXX001 | XXX001 | XXX001 | 2001/04/01~2002/03/31 | 20 minutes |
| | XXX002 | XXX002 | XXX002 | 2001/04/01~2002/03/31 | 10 minutes |
| XXXBBB | XXX003 | XXX003 | XXX003 | 2002/01/01~2002/12/31 | 30 minutes |
| ⋮ | ⋮ | ⋮ | ⋮ | ⋮ | ⋮ |

Usage right data base 301

## FIG. 16

501 — Usage right ID

201 — Content ID

701 — LT valid period

1500 — Usage permitted time

502 — Content decryption key

LT 700

# FIG. 17A

Limit marker 1702     Reproduction position tag 1701

Slide bar 1700

# FIG. 17B

Limit marker 1702     Reproduction position tag 1701

Slide bar 1700

# FIG. 18A

Reproduction position tag 1701

Reproduction completion
marker 1800

Limit marker 1702

Slide bar 1700

# FIG. 18B

Limit marker 1702

Reproduction
completion
marker 1800

Reproduction position tag 1701

Slide bar 1700

# FIG. 19

Reproduction position tag 1701

Consuming
marker 1703

Slide bar 1700

# FIG. 20

1803

Reproduction
position tag 1701

Non-reproduced part:15 minutes
Remaining time:20 minutes

Reproduction
completed
part 1801a

Reproduction
completed
part 1801b

Slide bar 1700

Non-reproduced
part 1802a

Non-reproduced
part 1802b

**INTERNATIONAL SEARCH REPORT**

| | International application No. |
|---|---|
| | PCT/JP2004/004760 |

**A. CLASSIFICATION OF SUBJECT MATTER**
Int.Cl$^7$ H04N7/16

According to International Patent Classification (IPC) or to both national classification and IPC

**B. FIELDS SEARCHED**

Minimum documentation searched (classification system followed by classification symbols)
Int.Cl$^7$ H04N7/16-7/173, 7/10, 5/91-5/956

Documentation searched other than minimum documentation to the extent that such documents are included in the fields searched
Jitsuyo Shinan Koho      1922-1996    Toroku Jitsuyo Shinan Koho    1994-2004
Kokai Jitsuyo Shinan Koho    1971-2004    Jitsuyo Shinan Toroku Koho    1996-2004

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2002-290954 A (Sanyo Electric Co., Ltd.),<br>04 October, 2002 (04.10.02),<br>All pages; all drawings<br>(Family: none) | 1-5,11-15<br>6-10,16-20 |
| A | JP 9-98404 A (Toshiba Corp.),<br>08 April, 1997 (08.04.97),<br>All pages; all drawings<br>(Family: none) | 1-20 |
| A | JP 8-265718 A (Matsushita Electric Industrial<br>Co., Ltd.),<br>11 October, 1996 (11.10.96),<br>All pages; all drawings<br>(Family: none) | 1-20 |

☒ Further documents are listed in the continuation of Box C.      ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>06 July, 2004 (06.07.04) | Date of mailing of the international search report<br>27 July, 2004 (27.07.04) |
|---|---|
| Name and mailing address of the ISA/<br>Japanese Patent Office | Authorized officer |
| Facsimile No. | Telephone No. |

Form PCT/ISA/210 (second sheet) (January 2004)

**INTERNATIONAL SEARCH REPORT**

| International application No. |
|---|
| PCT/JP2004/004760 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 7-327221 A  (Toshiba Corp.), 12 December, 1995 (12.12.95), All pages; all drawings (Family: none) | 1-20 |

Form PCT/ISA/210 (continuation of second sheet) (January 2004)